# EUROPEAN PATENT APPLICATION

(11) **EP 3 932 807 A1**
(43) Date of publication of application: **05.01.2022**
(21) Application number: 21183178.9
(22) Date of filing: 01.07.2021
(51) Int. Cl.: B64D 11/04, B65F 1/00

(54) **AIRCRAFT WASTE COMPARTMENT BIN LINERS**

(30) Priority: 01.07.2020 US 202063047042 P
(71) Applicant: B/E Aerospace, Inc., Winston-Salem, NC 27105 (US)
(72) Inventor: BURD, Peter, Burry Port, SA 160RB (GB); HOUGH, Ray, Winston Salem, North Carolina 27105 (US)
(74) Representative: Dehns

(57) **Abstract**

A liner for an aircraft waste bin includes at least one polyimide film (112) welded to form an interior space (116 with an opening (110) defined at one end of the interior space configured for passage of waste into the interior space. A system for aircraft waste can include an aircraft waste bin defining a bin interior with a bin opening in one end, and a liner as described above can be included, wherein the liner is seated in the bin interior with the liner opening aligned with the bin opening for receipt of waste. A method of disposing of waste in an aircraft interior includes collecting waste into a liner within a system for aircraft waste. The method includes removing the liner from the system for aircraft waste.

## Description

### CROSS-REFERENCE TO RELATED APPLICATIONS

This application claims benefit of priority to U.S. Provisional Patent Application No. 63/047,042 filed July 1, 2020.

### BACKGROUND

### 1. Field

The present disclosure relates to aircraft interiors, and more particularly to waste disposal operations for aircraft interiors.

### 2. Description of Related Art

The risk of contamination of viral pathogens such as COVID-19 is increased when potentially contaminated meal service waste is stored in galley waste compartment bins. This can be exasperated if used PPE (personal protective equipment) was also disposed of in this way. When the metallic or plastic compartment bin is full this has to be emptied by an attendant into a bag and the bag must be stowed in any vacant space that can be found, e.g., an empty meal trolley. There is a risk of viral transfer through direct waste and bag contact during this process.

The conventional techniques have been considered satisfactory for their intended purpose. However, there is an ever present need for improved systems and methods for waste disposal within aircraft interiors. This disclosure provides a solution for this need.

### SUMMARY

A liner for an aircraft waste bin includes at least one polyimide film welded to form an interior space with an opening defined at one end of the interior space configured for passage of waste into the interior space.

A draw string can extend around the opening, with one or more portions of the draw string exposed for drawing the opening closed. It is also contemplated that the opening can define a plurality of tie handles configured to be tied together for closure of the opening.

A wire frame can support the at least one polyimide film with the opening held in open position. It is also contemplated that a system for aircraft waste can include an aircraft waste bin defining a bin interior with a bin opening in one end, and a liner as described above can be included, wherein the liner is seated in the bin interior with the liner opening aligned with the bin opening for receipt of waste. The waste bin can be in an aircraft galley insert, wherein the at least one polyimide film and liner interior space are dimensioned to substantially fill and conform to the waste bin. It is also contemplated that the waste bin can be in an aircraft lavatory, wherein the at least one polyimide film and liner interior space are dimensioned substantially fill and conform to the waste bin.

A method of disposing of waste in an aircraft interior includes collecting waste into a liner within a system for aircraft waste. The method includes removing the liner from the system for aircraft waste. The method can include closing off an opening of the liner, e.g. using a draw string, tie handles, or the like. The method can include emptying the liner, cleaning the liner, and/or reusing the liner.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a perspective view of a portion of a system constructed in accordance with the present disclosure, showing a waste bin in a galley trolley, with the liner in the bin;
Fig. 2 is an exploded perspective view of the bin of Fig. 1, showing liner exploded out from the bin and showing the draw string for closure of the liner;
Fig. 3 is a perspective view of a bin with another embodiment of a liner, having tie handles for closure;
Fig. 4 is a perspective view of an aircraft galley, showing a bin and liner partially removed from a trolley to show the liner;
Fig. 5 is a front perspective view of another liner embodiment, for use in an aircraft lavatory; and
Fig. 6 is a perspective view of the liner of Fig. 1, exploded from a wire support.

### DETAILED DESCRIPTION OF THE PREFERRED EMBODIMENTS

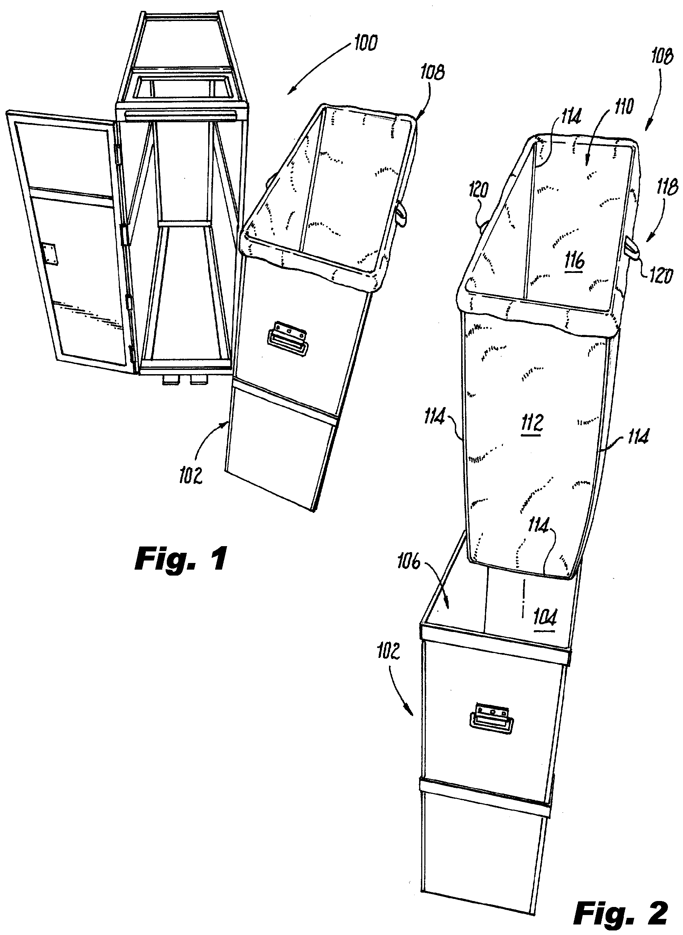

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-6, as will be described. The systems and methods described herein can be used to improve waste disposal within aircraft interiors, e.g. for reduction of transmission of infectious agents and the like.

The system 100 for aircraft waste can include an aircraft waste bin 102 defining a bin interior 104 with a bin opening 106 in one end (reference characters 104 and 106 are labeled in Fig. 2). A liner 108 is seated in the bin interior 104 with the liner opening 110 aligned with the bin opening 106 for receipt of waste, as shown in Fig. 2.

With continued reference to Fig. 2, the liner 108 for an aircraft waste bin includes at least one polyimide film 112 welded, e.g. along weld lines 114, to form an interior space 116 with the liner opening 110 defined at one end of the liner interior space 116 configured for passage of waste into the liner interior space 116.

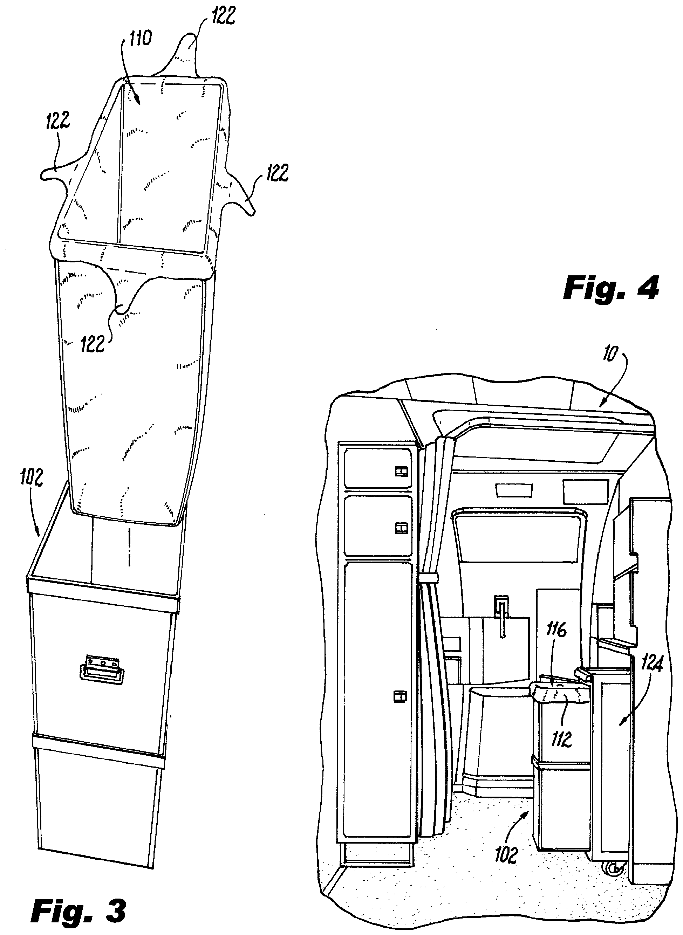

A draw string 118 can extend around the liner opening 110, with one or more portions 120 of the draw string 118 exposed for drawing the liner opening 110 closed. As shown in Fig. 3, it is also contemplated that the liner opening 110 can define a plurality of tie handles 122 configured to be tied together for closure of the liner opening 110.

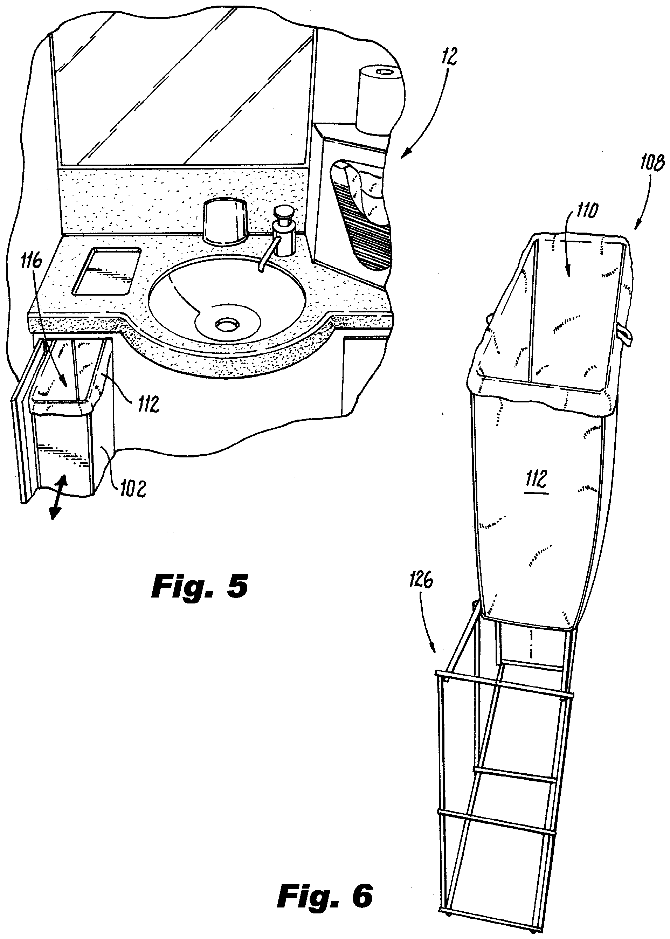

Referring now to Fig. 4, the waste bin 102 can be in an aircraft galley insert or trolley 124 for use in an aircraft galley 10, wherein the at least one polyimide film 112 and liner interior space 116 are dimensioned to substantially fill and conform to the waste bin 102. As shown in Fig. 5, it is also contemplated that the waste bin 102 can be in an aircraft lavatory 12, wherein the at least one polyimide film 112 and liner interior space 116 are dimensioned substantially fill and conform to the waste bin 102 in the aircraft lavatory 12. As shown in Fig. 6, in lieu of or in addition to a bin 102, a wire frame 126 can support the at least one polyimide film 112 with the liner opening 110 held in open position for receipt of waste, e.g. during flight.

With continued reference to Figs. 1-6, a method of disposing of waste in an aircraft interior, e.g. in galley 10, lavatory 12, and/or in an aircraft cabin in general, can include collecting waste into a liner, e.g. liner 108 within a system for aircraft waste, e.g. system 100. The method includes removing the liner from the system for aircraft waste, e.g. with the waste inside the liner rather than dumping the waste from a bin into another receptacle. The method can include closing off an opening of the liner, e.g. opening 110. This can be done e.g. using a draw string 118, tie handles 122, or the like. The method can include emptying the liner, cleaning the liner, and/or reusing the liner, e.g. placing the liner back into the bin 102 or into a different bin 102 of similar dimensions. It is also contemplated that the liner can be recycled after its first use in disposal of waste.

This disclosure provides a fire resistance enhancement (FRE) properties/FRE containment certified for flight polyimide bag or sack, which replaces the compartment bin or lines the compartment itself, e.g. using a wire frame for support. The films 112 can be heat welded together. A potential advantage is keeping the waste isolated once disposed of, and minimizing the flight attendants' secondary contact with potentially contaminated waste or cross contamination from stowage of waste in temporary locations. The polyimide film can be a DuPont Kapton^{®} FN film, available from DuPont de Nemours, Inc. of Wilmington, Delaware.

This disclosure provides a method of receiving and storing potentially contaminated waste in an un-modified galley waste compartment, it reduces the potential risk of infection for the cabin crew and off-aircraft garbage handlers. It also significantly reduces the risk of cross contamination of temporary storage locations. Not only protects against viral infection, but would be generally more hygienic to use, and can provide a weight savings in aircraft. Importantly the material is capable of meeting the airworthiness requirements for FRE containment in an on-aircraft galley waste compartment consistent with U.S. Federal Aviation Regulations, 14 CFR § 25.856(a).

The methods and systems of the present disclosure, as described above and shown in the drawings, provide for waste disposal within aircraft interiors with reduced transmission of infectious agents and other potential benefits as outlined herein. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. A liner for an aircraft waste bin comprising:
at least one polyimide film (112) welded to form an interior space (116) with an opening (110) defined at one end of the interior space configured for passage of waste into the interior space.

2. The liner as recited in claim 1, further comprising a draw string (118) extending around the opening, with one or more portions (120) of the draw string exposed for drawing the opening closed.

3. The liner as recited in claim 1 or 2, wherein the opening defines a plurality of tie handles (122) configured to be tied together for closure of the opening.

4. The liner as recited in any preceding claim, wherein the at least one polyimide film and interior space are dimensioned for use in an aircraft galley waste compartment.

5. The liner as recited in any of claims 1 to 3, wherein the at least one polyimide film and interior space are dimensioned for use in an aircraft lavatory waste compartment.

6. The liner as recited in an preceding claim, further comprising a wire frame (126) supporting the at least one polyimide film with the opening held in open position.

7. A system for aircraft waste comprising:
an aircraft waste bin (102) defining a bin interior (104) with a bin opening (106) in one end; and
a liner (108 including at least one polyimide film (112) welded to form a liner interior space (116) with a liner opening (110) defined at one end of the interior space configured for passage of waste into the liner interior space, wherein the liner is seated in the bin interior with the liner opening aligned with the bin opening for receipt of waste.

8. The system as recited in claim 7, further comprising a draw string (118) extending around the liner opening, with one or more portions (120) of the draw string exposed for drawing the liner opening closed.

9. The system as recited in claim 7 or 8, wherein the liner opening defines a plurality of tie handles (122) configured to be tied together for closure of the liner opening.

10. The system as recited in claim 7,8 or 9, wherein the waste bin is in an aircraft galley insert, and wherein the at least one polyimide film and liner interior space are dimensioned to substantially fill and conform to the waste bin.

11. The system as recited in claim 7, 8 or 9, wherein the waste bin is in an aircraft lavatory, wherein the at least one polyimide film and liner interior space are dimensioned substantially fill and conform to the waste bin.

12. A method of disposing of waste in an aircraft interior comprising:
collecting waste into a liner within a system for aircraft waste; and
removing the liner from the system for aircraft waste.

13. The method as recited in claim 12, further comprising closing off an opening of the liner.

14. The method as recited in claim 12 or 13, further comprising emptying the liner and cleaning the liner.

15. The method as recited in claim 14, further comprising reusing the liner.
